# EUROPEAN PATENT SPECIFICATION

(11) **EP 3 528 415 B1**
(45) Date of publication and mention of the grant of the patent: **27.10.2021**
(21) Application number: 17866443.9
(22) Date of filing: 03.11.2017
(51) Int. Cl.: H04L 5/00, H04L 5/14, H04L 27/26, H04W 24/02, H04W 72/04, H04W 72/08

(54) **INFORMATION TRANSMISSION METHOD AND APPARATUS**
INFORMATIONSÜBERTRAGUNGSVERFAHREN UND VORRICHTUNG
PROCÉDÉ ET APPAREIL DE TRANSMISSION D'INFORMATIONS

(30) Priority: 04.11.2016 CN 201610963575
(43) Date of publication of application: 21.08.2019
(73) Proprietor: Huawei Technologies Co., Ltd., Longgang District Shenzhen, Guangdong 518129 (CN)
(72) Inventor: LI, Junchao, Shenzhen Guangdong 518129 (CN); GONG, Zhengwei, Shenzhen Guangdong 518129 (CN); ZHANG, Chi, Shenzhen Guangdong 518129 (CN)
(74) Representative: Maiwald Patent- und Rechtsanwaltsgesellschaft mbH
(86) International application number: PCT/CN2017/109382
(87) International publication number: WO 2018/082669

(56) References cited:
- WO-A1-2010/106923
- WO-A1-2016/004634
- CN-A- 101 154 980
- CN-A- 102 088 309
- CN-A- 102 300 244
- CN-A- 102 917 371
- US-A1- 2015 319 636
- OPPO: "Subcarrier spacing design for data and reference signal", 3GPP DRAFT; R1-1608900_SUBCARRIER SPACING DESIGN FOR DATA AND REFERENCE SIGNAL_FINAL, 3RD GENERATION PARTNERSHIP PROJECT (3GPP), MOBILE COMPETENCE CENTRE ; 650, ROUTE DES LUCIOLES ; F-06921 SOPHIA-ANT , vol. RAN WG1, no. Lisbon, Portugal; 20161010 - 20161014 9 October 2016 (2016-10-09), XP051148954, Retrieved from the Internet: URL:http://www.3gpp.org/ftp/Meetings_3GPP_ SYNC/RAN1/Docs/ [retrieved on 2016-10-09]
- ERICSSON: "Impact of decisions on bandwidth and subcarrier spacing on RRM requirements", 3GPP DRAFT; R4-165128, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG4, no. Gothenburg, Sweden; 20160822 - 20160826 21 August 2016 (2016-08-21), XP051127883, Retrieved from the Internet: URL:http://www.3gpp.org/ftp/Meetings_3GPP_ SYNC/RAN4/Docs/ [retrieved on 2016-08-21]

## Description

### TECHNICAL FIELD

The present invention relates to the field of communications technologies, and in particular, to an information transmission method and apparatus.

### BACKGROUND

With development of wireless network technologies, endlessly emerging services have an increasing requirement for radio resources. To adapt to a quick change in an uplink/downlink service feature required in some networks such as a small coverage network, a dynamic time division duplex (D-TDD) technology attracts increasing attention. The D-TDD means that switching is flexibly and quickly performed between uplink and downlink in a time division duplex (TDD) subframe or slot based on an uplink/downlink service load status in a network, to meet a specific service requirement of the network and improve an uplink/downlink service throughput of the network.

The 3rd Generation Partnership Project (3GPP) has preliminarily completed standardization work on the D-TDD in Rel-12 (a related part in the standard is enhanced interference management and traffic adaptation eIMTA). At present, the 3GPP has launched to draw up the New Radio (NR) standard of a 5th generation (5G) network, and the D-TDD is one of important features of NR.

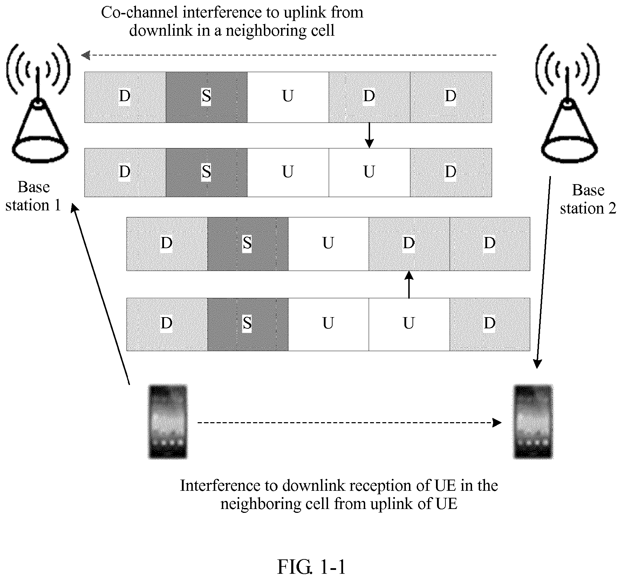

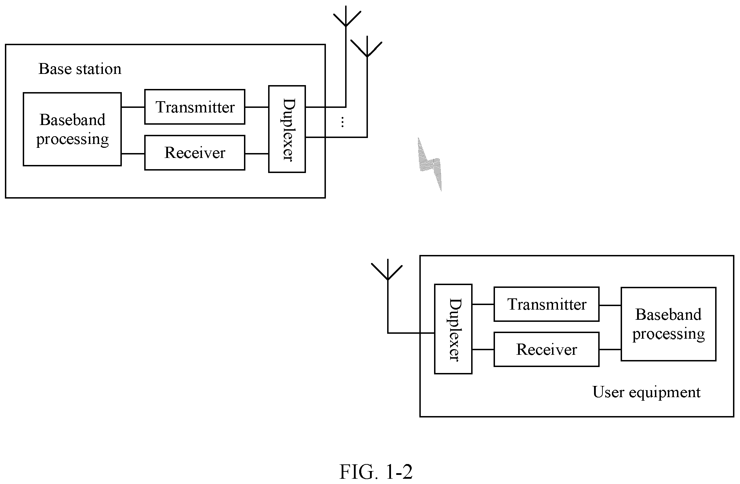

In the D-TDD, as shown in FIG. 1-1, there is co-channel cross interference between neighboring cells, including co-channel interference to uplink reception of a base station of a current cell from downlink transmission of a base station of a neighboring cell and interference to downlink reception of user equipment (UE) in the current cell from uplink transmission of UE in the neighboring cell.

To better obtain flexible and efficient performance advantages of the D-TDD technology, and effectively improve a performance gain of the D-TDD, interference in the D-TDD may be detected by using a measurement reference signal (MRS). How to provide a measurement reference signal that is applicable to a future network, such as a 5G scenario, becomes a problem to be urgently resolved.

The WO 2016/004634 A1 refers to a method for ENB, UE uplink transmission and reception, wherein a subcarrier spacing of a reference signal is a multiple of a subcarrier spacing of a data channel.

The article from OPPO, 3GPP DRAFT; R1-1608900 Subcarrier spacing design for data and reference signal final, 3rd Generation Partnership Project (3GPP), Mobile Competence Centre; 650, route des Lucioles; F-06921 Sophia-Antipolis Cedex; vol, RAN WG1, no. Lisbon, Portugal; 20161010 - 20161014, 9 October 2016 (2016-10-09), XP051148954, refers to a subcarrier spacing design for data and reference signal.
The US 2015 / 319636 A1 refers to a method and an apparatus for measuring interference in a wireless communication system.

The article from Ericsson, 3GPP DRAFT; R4-165128, 3rd Generation Partnership Project (3GPP), Mobile Competence Centre; 650, route des Lucioles; F-06921 Sophia-Antipolis Cedex; vol, RAN WG4, no. Gothenburg, Sweden; 20160822 - 20160826, 21 August 2016 (2016-08-21), XP051127883, refers to "Impact of decisions on bandwidth and subcarrier spacing on RRM requirements".

### SUMMARY

Embodiments of the present invention provide an information transmission method a wireless network device and a terminal device to adapt to communication in a future network. The invention is set out in the appended set of claims.

For ease of understanding, description of some concepts related to the present invention is provided as an example for reference, as shown below.

The 3rd Generation Partnership Project (3GPP for short) is a project for developing a wireless communications network. In general, an organization related to the 3GPP is referred to as a 3GPP organization.

A wireless communications network is a network that provides a wireless communication function. Different communications technologies may be used in the wireless communications network, such as Code Division Multiple Access (CDMA for short), Wideband Code Division Multiple Access (WCDMA for short), Time Division Multiple Access (TDMA for short), Frequency Division Multiple Access (FDMA for short), orthogonal frequency division multiple access (OFDMA for short), single carrier frequency division multiple access (SC-FDMA for short), and carrier sense multiple access with collision avoidance. Based on factors such as capacities, rates, and delays of different networks, networks may be classified into a 2G network, a 3G network, a 4G network, or a future evolved network such as a 5G network. A typical 2G network includes a Global System for Mobile Communications (GSM for short) network or a general packet radio service (GPRS for short) network. A typical 3G network includes a Universal Mobile Telecommunications System (UMTS for short) network. A typical 4G network includes a Long Term Evolution (LTE for short) network. A new radio (NR) technology may be used in a future evolved network such as a 5G network. Alternatively, the UMTS network sometimes may be referred to as a universal terrestrial radio access network (UTRAN for short), and alternatively, the LTE network sometimes may be referred to as an evolved universal terrestrial radio access network (E-UTRAN for short). Based on different resource allocation manners, networks may be classified into a cellular communications network and a wireless local area network (WLAN for short). The cellular communications network focuses on scheduling, and the WLAN focuses on contention. All the foregoing 2G, 3G, and 4G networks are cellular communications networks. A person skilled in the art should know that, with development of technologies, the technical solutions provided in the embodiments of the present invention may also be applied to another wireless communications network such as a 4.5G or 5G network, or another non-cellular communications network. For brevity, in the embodiments of the present invention, the wireless communications network sometimes is referred to as a network.

The cellular communications network is one of wireless communications networks. The cellular communications network uses a cellular wireless networking manner, and connects a terminal device to a network device by using a wireless channel, to implement mutual communication between moving users. The cellular communications network has a main feature of mobility of a terminal, and has functions of inter-cell handover and automatic roaming across a local network.

User equipment (UE for short) is a terminal device, and may be a movable terminal device or an unmovable terminal device. The device is mainly configured to receive or send service data. The user equipment may be distributed in a network. The user equipment in different networks has different names, such as a terminal, a mobile console, a subscriber unit, a station, a cellular phone, a personal digital assistant, a wireless modem, a wireless communications device, a handheld device, a laptop computer, a cordless telephone set, and a wireless local loop station. The user equipment may communicate with one or more core networks by using a radio access network (RAN for short) (an access part of a wireless communications network), for example, exchange voice and/or data with the radio access network.

A base station (BS for short) device may also be referred to as a base station, and is an apparatus that is deployed in the radio access network and that is configured to provide a wireless communication function. For example, in a 2G network, devices that provide a base station function include a base transceiver station (BTS for short) and a base station controller (BSC for short). In a 3G network, devices that provide a base station function include a NodeB and a radio network controller (RNC for short). In a 4G network, devices that provide a base station function include an evolved NodeB (eNB for short). In a 5G network, devices that provide a base station function include a next generation NodeB (gNB). In a WLAN, a device that provides a base station function is an access point (AP for short).

A wireless device is a device that is located in a wireless communications network and that can communicate wirelessly. The device may be a base station, may be user equipment, or may be another network element.

A network side device is a device located on a network side in a wireless communications network, and may be an access network element, such as a base station or a controller (if any), or may be a core network element, or may be another network element.

New Radio (NR for short) refers to a new next-generation mobile network air interface standard that is based on OFDM.

A wireless local area network (WLAN for short) is a local area network in which a radio wave is used as a data transmission medium, and generally, a transmission distance of the wireless local area network is only tens of meters.

An access point (AP for short) is a device that is connected to a wireless network or may be connected to a wired network. The access point can be used as an intermediate point, so that wired and wireless network devices connect to each other and transmit data.

RRC (radio resource control) is radio resource control.

RRC processes third layer information of a control plane between UE and a UTRAN. The RRC usually includes at least one of the following functions:
broadcasting information provided by a non-access stratum of a core network: The RRC is responsible for broadcasting network system information to the UE. The system information is usually repeated according to a specific basic rule. The RRC is responsible for planning, segmenting, and repeating the system information, and also supports broadcasting of upper-layer information;
associating broadcast information with an access stratum: The RRC is responsible for broadcasting network system information to the UE. The system information is usually repeated according to a specific basic rule. The RRC is responsible for planning, segmenting, and repeating the system information; and
establishing, re-establishing, maintaining, and releasing an RRC connection between the UE and the UTRAN: To establish a first signal connection of the UE, an upper layer of the UE requests establishment of an RRC connection. An RRC connection establishment process includes several steps: reselecting an available cell, controlling access permission, and establishing a layer 2 signal link. RRC connection releasing is also requested by the upper layer, and is used to release a final signal connection; or when an RRC link fails, RRC connection releasing is initiated by an RRC layer. If a connection fails, the UE may request re-establishment of an RRC connection. If the RRC connection fails, the RRC releases an allocated resource.

Time domain resource unit:
a unit used to describe time domain resource scheduling and/or allocation in a wireless communications system. The time domain resource unit may correspond to a subframe or a slot in an LTE system. One time domain resource unit may include more than one symbol resource, and more than one time domain resource unit may be included in one time domain resource with a longer time, for example, a corresponding frame in the LTE system.

Structure of the time domain resource unit:
also referred to as a slot structure, a frame structure, or a subframe structure, including one or more of information such as a quantity of symbols included in the time domain resource unit, a category of a carried signal, such as a control signal and a data signal, a quantity of symbols occupied by each signal category, and a transmission direction. The structure of the time domain resource unit may be understood as a pattern (pattern) that is met during wireless transmission performed by a wireless network device or user equipment on the time domain resource unit.

An interference level is also referred to as a type of interference information, and is interference related information that is set according to a specific rule. The specific rule may vary based on a protocol definition or a system requirement. For example, the rule may be whether there is cross interference, or a quantity of cross interferences.

Interference to UE on a time domain resource unit is interference to the UE on the time domain resource unit that is caused by uplink or downlink transmission from another UE.

### BRIEF DESCRIPTION OF DRAWINGS

FIG. 1-1 is a schematic diagram of a communications system and cross interference in the communications system (only a base station and UE are shown);
FIG. 1-2 is a simplified schematic diagram of internal structures of a base station and UE;
FIG. 2 is a schematic diagram of supporting a plurality of subcarrier spacings by an NR technology;
FIG. 3 is a schematic flowchart of an information transmission method according to an embodiment of the present invention;
FIG. 4 is a schematic flowchart of another information transmission method according to an embodiment of the present invention;
FIG. 5a is a schematic structural diagram of a time domain resource unit in another information transmission method according to an embodiment of the present invention;
FIG. 5b is a schematic flowchart of another information transmission method according to an embodiment of the present invention;
FIG. 6a is a schematic structural diagram of a time domain resource unit in another information transmission method according to an embodiment of the present invention;
FIG. 6b is a schematic flowchart of another information transmission method according to an embodiment of the present invention;
FIG. 7 is a schematic structural diagram of a time domain resource unit that has a plurality of types of characteristic information according to an embodiment of the present invention;
FIG. 8 is a schematic flowchart of another information transmission method according to an embodiment of the present invention;
FIG. 9 is a schematic diagram of an information transmission apparatus according to an embodiment of the present invention;
FIG. 10 is a schematic diagram of another information transmission apparatus according to an embodiment of the present invention; and
FIG. 11 is a schematic structural diagram of an evolved sub frame according to an embodiment of the present invention.

### DESCRIPTION OF EMBODIMENTS

The following describes the technical solutions in the embodiments of the present invention with reference to the accompanying drawings in the embodiments of the present invention. Apparently, the described embodiments are merely some rather than all of the embodiments of the present invention. All other embodiments obtained by a person of ordinary skill in the art based on the embodiments of the present invention without creative efforts shall fall within the protection scope of the present invention.

Terms such as "component", "module", and "system" used in this application are used to indicate computer-related entities. The computer-related entities may be hardware, firmware, combinations of hardware and software, software, or software in running. For example, a component may be but is not limited to a process that runs on a processor, a processor, an object, an executable file, a thread of execution, a program, and/or a computer. For example, both a computing device and an application that runs on the computing device may be components. One or more components may reside within a process and/or a thread of execution, and a component may be located on one computer and/or distributed between two or more computers. In addition, these components may be executed from various computer-readable media that have various data structures. These components may communicate by using a local and/or remote process and according to, for example, a signal having one or more data packets (for example, data from one component, where the component interacts with another component in a local system or a distributed system, and/or interacts with other systems via a network such as the Internet by using a signal).

In addition, in this application, various aspects are described by using a wireless device. The wireless device may be a wireless network device, or may be a terminal device. The wireless network device may be a base station. The base station may be configured to communicate with one or more user equipments, or may be configured to communicate with one or more base stations having some user equipment functions (for example, communication between a macro base station and a micro base station such as access points). Alternatively, the wireless device may be user equipment. The user equipment may be configured to communicate with one or more user equipments (for example, D2D communication), or may be configured to communicate with one or more base stations. The user equipment may be referred to as a user terminal, and may include some or all functions of a system, a subscriber unit, a subscriber station, a mobile station, a mobile wireless terminal, a mobile device, a node, a device, a remote station, a remote terminal, a terminal, a wireless communications device, a wireless communications apparatus, or a user agent. The user equipment may be a cellular phone, a cordless telephone set, a Session Initiation Protocol (SIP) phone, a smartphone, a wireless local loop (WLL) station, a personal digital assistant (PDA), a laptop computer, a handheld communications device, a handheld computing device, a satellite wireless device, a wireless modem card, and/or another processing device configured to communicate in a wireless system. The base station may be further referred to as an access point, a node, a NodeB, an evolved NodeB (eNB), a next generation NodeB (gNB), or another network entity, and may include some or all functions of the foregoing network entities. The base station may communicate with a wireless terminal by using an air interface. The communication may be performed by using one or more sectors. The base station may convert a received air interface frame into an IP packet, and is used as a router between the wireless terminal and a remaining part of an access network. The access network includes an Internet Protocol (IP) network. The base station may further coordinate air interface feature management, and may be used as a gateway between a wired network and a wireless network. For example, the base station may be an evolved NodeB (eNB), a radio network controller (RNC), a NodeB (NB), a base station controller (BSC), a base transceiver station (BTS), a home base station (for example, Home evolved NodeB, or Home NodeB, HNB), a baseband unit (BBU), Wireless Fidelity (Wi-Fi), an access point (AP), a transmission/reception point (transmission/reception point, TRP or transmission point, TP), or the like, or may be a gNB or a transmission/reception point (TRP (transmission/reception point) or TP (transmission point)) in a system of 5G, such as NR (new radio), or may be a network node included in a gNB or a transmission/reception point, for example, a baseband unit (BBU) or a data unit (DU,). In some deployments, the gNB may include a control unit (CU) and a DU. The gNB may further include a radio unit (RU). The CU implements some functions of the gNB, and the DU implements some functions of the gNB. For example, the CU implements functions of an RRC (radio resource control) layer and functions of a PDCP (Packet Data Convergence Protocol) layer, and the DU implements functions of an RLC (Radio Link Control) layer, a MAC (Media Access Control) layer, and a PHY (physical) layer. RRC layer information finally becomes PHY layer information, or is converted from PHY layer information. Therefore, it may also be considered that, in this architecture, higher layer signaling, such as RRC layer signaling or PHCP layer signaling, may be sent by the DU, or sent by both the DU and the RU.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, the word "example" in the embodiments of the present invention is used to represent giving an example, an illustration, or a description. Any embodiment or design scheme described as an "example" in this application should not be explained as being more preferred or having more advantages than another embodiment or design scheme. Exactly, "example" is used to present a concept in a specific manner.

In the embodiments of the present invention, information, signal, message, and channel may be interchangeably used sometimes. It should be noted that expressed meanings are consistent when differences are not emphasized. "Of", "corresponding (corresponding, relevant)", and "corresponding" may be interchangeably used sometimes. It should be noted that expressed meanings are consistent when differences are not emphasized.

In the embodiments of the present invention, sometimes a word, such as W₁, including a subscript may be written in an incorrect form such as W₁. Expressed meanings are consistent when differences are not emphasized.

Network architectures and service scenarios described in the embodiments of the present invention are intended to more clearly describe the technical solutions in the embodiments of the present invention, but are not intended to limit the technical solutions provided in the embodiments of the present invention. A person of ordinary skill in the art may learn that as the network architectures evolve and a new service scenario emerges, the technical solutions provided in the embodiments of the present invention are further applicable to a similar technical problem.

The embodiments of the present invention are described by using an example of a 4G network scenario in a wireless communications network. It should be noted that the solutions in the embodiments of the present invention may also be applied to another wireless communications network, such as a 5G communications network, and a corresponding name may be replaced with a corresponding function name in the another wireless communications network.

It should be noted that the method or the apparatus in the embodiments of the present invention may be applied between a base station and user equipment, or may be applied between base stations (for example, between a macro base station and a micro base station), or may be applied between user equipments (for example, in a D2D scenario). In some embodiments of the present invention, communication between the base station and the UE is used as an example for description.

FIG. 1-1 is a schematic structural diagram of a communications system. The communications system may include a core network, an access network, and a terminal. FIG. 1-1 shows only a wireless network device included in the access network, such as a base station, and a terminal, such as user equipment.

FIG. 1-2 is a simplified schematic diagram of internal structures of a base station and UE.

For example, the base station may include an antenna array, a duplexer, a transmitter (TX), a receiver (RX) (sometimes the TX and the RX are collectively referred to as a transceiver TRX), and a baseband processing part. The duplexer is configured to implement the antenna array and is configured to send and receive signals. The TX is configured to implement conversion between a radio frequency signal and a baseband signal. The TX may usually include a power amplifier PA, a digital-to-analog converter DAC, and an inverter. The RX may usually include a low-noise amplifier LNA, an analog-to-digital converter ADC, and an inverter. The baseband processing part is configured to implement processing of a to-be-sent or received signal, such as layer mapping, precoding, modulation/demodulation, and encoding/decoding, and perform separate processing on a physical control channel, a physical data channel, a physical broadcast channel, a reference signal, and the like.

For example, the base station may further include a control part, configured to perform multi-user scheduling and resource allocation, pilot scheduling, user physical layer parameter configuration, and the like.

For example, the UE may include an antenna, a duplexer, a transmitter (TX), a receiver (RX) (sometimes the TX and the RX are collectively referred to as a transceiver TRX), and a baseband processing part. In FIG. 1-2, the UE has a single antenna. It may be understood that alternatively, the UE may have a plurality of antennas (namely, an antenna array).

The duplexer is configured to implement the antenna array and is configured to send and receive signals. The TX is configured to implement conversion between a radio frequency signal and a baseband signal. The TX may usually include a power amplifier PA, a digital-to-analog converter DAC, and an inverter. The RX may usually include a low-noise amplifier LNA, an analog-to-digital converter ADC, and an inverter. The baseband processing part is configured to implement processing of a to-be-sent or received signal, such as layer mapping, precoding, modulation/demodulation, and encoding/decoding, and perform separate processing on a physical control channel, a physical data channel, a physical broadcast channel, a reference signal, and the like.

For example, the UE may also include a control part, configured to request an uplink physical resource, calculate channel state information (CSI) corresponding to a downlink channel, determine whether a downlink data packet is successfully received, and so on.

A 5G system is still an OFDM system (a system in which an OFDM technology is used). In the OFDM system, a subcarrier spacing is chosen depending on a trade-off between spectral efficiency and a frequency offset resistance capability. In a case of a specific cyclic prefix (CP, Cyclic Prefix) length, a smaller subcarrier spacing indicates a longer OFDM symbol period and higher system spectral efficiency. However, an excessively small subcarrier spacing is sensitive to a Doppler frequency shift and phase noise. This may affect system performance. Conversely, if a subcarrier spacing is larger, an OFDM symbol period is shorter, but a capability of resisting a Doppler frequency shift and phase noise can be improved, and complexity of fast Fourier transformation (FFT) transformation is reduced.

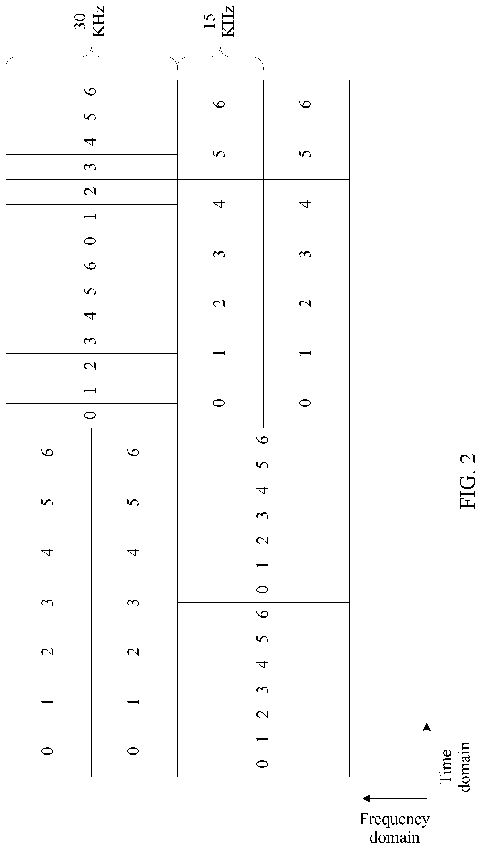

As shown in FIG. 2, an NR technology supports multiplexing of OFDM symbols of a plurality of subcarrier spacings (for example, 15 KHz, 30 KHz, and 60 KHz) in a frequency division multiplexing (FDM, Frequency Division Multiplexing) mode and/or a time division multiplexing (TDM, Time Division Multiplexing) mode.

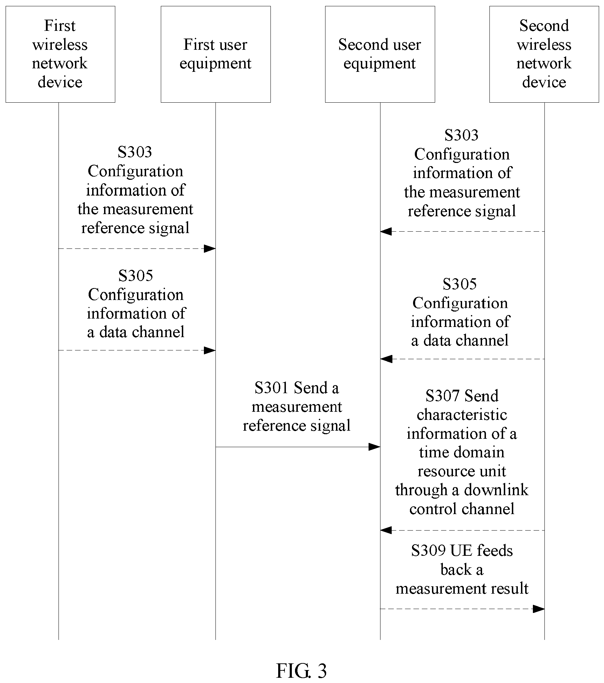

Based on this, an embodiment of the present invention provides an information transmission method. As shown in FIG. 3, the method includes the following step:
S301. First UE sends a measurement reference signal, where a subcarrier spacing of the measurement reference signal is a multiple of a subcarrier spacing of a data channel of the UE.

Second UE receives the measurement reference signal, where the subcarrier spacing of the measurement reference signal is a multiple of a subcarrier spacing of a data channel of the UE.

Optionally, the subcarrier spacing of the measurement reference signal is greater than the subcarrier spacing of the data channel of the UE.

Optionally, the multiple is greater than 1.

In this way, measurement reference signal transmission overheads can be reduced.

In this way, a measurement reference signal may be transmitted between UEs, to measure interference between the UEs and further perform short-term or long-term control by using a measurement result.

Optionally, on a first UE side, a data transmission direction on a time domain resource unit on which the measurement reference signal is located is downlink, and on a second UE side, a data transmission direction on a time domain resource unit on which the measurement reference signal is located is uplink.

In this way, the first UE may measure a received first measurement reference signal, and may control uplink data transmission by using a measurement result, for example, adjust uplink data transmission control, to reduce interference between the UEs.

Optionally, the subcarrier spacing of the measurement reference signal may be predefined without being indicated (for example, explicitly indicated) by a specific configuration of a wireless network device. In this way, configuration overheads can be reduced.

Optionally, the subcarrier spacing of the measurement reference signal may be configured by the wireless network device. In this way, flexibility of measurement reference signal transmission can be increased.

Optionally, the method further includes the following step:
S303. A first wireless network device sends information used to configure the measurement reference signal transmitted by the first user equipment (UE), where the information includes information about the subcarrier spacing of the measurement reference signal.

The first user equipment (UE) receives configuration information from the first wireless network device. The configuration information includes the information used to configure the measurement reference signal transmitted by the first user equipment, and the information about the measurement reference signal includes the information about the subcarrier spacing of the measurement reference signal.

A second wireless network device sends information used to configure the measurement reference signal transmitted by the second user equipment (UE), where the information includes information about the subcarrier spacing of the measurement reference signal.

The second user equipment (UE) receives configuration information from the second wireless network device. The configuration information includes the information used to configure the measurement reference signal transmitted by the second user equipment, and the information about the measurement reference signal includes the information about the subcarrier spacing of the measurement reference signal.

Optionally, the method further includes the following step:
S306. The first UE receives information used to configure a parameter of the data channel from the first wireless network device, where the parameter of the data channel includes the information about the subcarrier spacing of the data channel, and optionally, the data channel may be a downlink data channel.

The second UE receives information used to configure a parameter of the data channel from the second wireless network device, where the parameter of the data channel includes the information about the subcarrier spacing of the data channel. Optionally, the data channel may be an uplink data channel.

The method further includes the following step:
S307. A second wireless network device sends characteristic information of a time domain resource unit to second UE through a downlink control channel, where the time domain resource unit includes a resource used to receive the measurement reference signal.

The characteristic information is related to interference to the time domain resource unit, or is related to a data transmission direction on the time domain resource unit. For example, the data transmission direction on the time domain resource unit includes a data transmission direction on a time domain resource unit in a neighboring cell of a cell in which the second UE is located.

The second user equipment (UE) receives the characteristic information of the time domain resource unit from the second wireless network device through the downlink control channel.

S309. The second UE sends a measurement result to the wireless network device, where the measurement result is related to the characteristic information of the time domain resource unit.

The second wireless network device receives the measurement result from the second UE.

In this way, the UE can learn a status of interference to a time domain resource unit of the UE, so that long-term control based on a measurement result of a measurement reference signal is more accurate.

Optionally, the time domain resource unit is a time domain resource unit used to transmit uplink data.

Optionally, S303 may further include:
The first wireless network device determines the information used to configure the measurement reference signal transmitted by the first user equipment, and the second wireless network device determines the information used to configure the measurement reference signal transmitted by the second user equipment.

Optionally, the first wireless network device may determine, through interaction with the second wireless network device, the information used to configure the measurement reference signal transmitted by the first user equipment or the second user equipment.

Optionally, the information about the subcarrier spacing of the measurement reference signal is a value of the subcarrier spacing of the measurement reference signal. Optionally, the information about the subcarrier spacing of the measurement reference signal may be an index value of the value of the subcarrier spacing.

The information about the subcarrier spacing of the measurement reference signal includes information about a quantity of times by which the subcarrier spacing of the measurement reference signal is the subcarrier spacing of the data channel of the UE. Optionally, the information about the subcarrier spacing of the measurement reference signal may be an index value of the information about the quantity of times.

Optionally, the configuration information is carried on the downlink control channel, or the configuration information is carried on a broadcast channel or higher layer signaling.

Optionally, the multiple is an integral multiple.

Optionally, the information about the measurement reference signal further includes one or more of time domain resource information, frequency domain resource information, sequence information, and timing information of the measurement reference signal.

Optionally, the measurement reference signal is transmitted in an area used for a guard period.

Optionally, the transmission includes sending and/or receiving.

Optionally, the characteristic information is one of more than one type of characteristic information.

For example, the more than one type of characteristic information is obtained through encoding based on a level of interference (which may also be referred to as a type of interference information) to the UE on a time domain resource unit, and the characteristic information may be in a one-to-one correspondence with codes. For example, characteristic information of a time domain resource unit that has cross interference is encoded as 1, and characteristic information of a time domain resource unit that has no cross interference is encoded as 0; or characteristic information of a time domain resource unit that has no cross interference is encoded as 0, characteristic information of a time domain resource unit that has one cross interference is encoded as 1, and characteristic information of a time domain resource unit that has two cross interferences is encoded as 2.

According to the method implemented in the present invention, a measurement reference signal transmission mode applicable to a 5G system may be provided. Further, a wireless network device delivers characteristic information of a time domain resource unit, so that accuracy of a measurement result reported to the wireless network device by UE served by the wireless network device can be improved. It may be understood that, a service in all the embodiments of the present invention may refer to a communication connection, or may refer to specific data transmission or control information transmission. This is not limited herein.

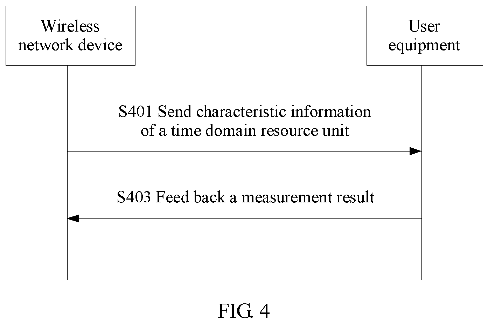

An embodiment of the present invention further provides an information transmission method. As shown in FIG. 4, the method may include the following steps.

S401. A wireless network device sends characteristic information of a time domain resource unit to UE through a downlink control channel.

The characteristic information is related to interference to the time domain resource unit, or is related to a data transmission direction on the time domain resource unit.

The user equipment (UE) receives the characteristic information of the time domain resource unit from the wireless network device through the downlink control channel.

S403. The UE sends a measurement result to the wireless network device, where the measurement result is related to the characteristic information of the time domain resource unit.

The wireless network device receives the measurement result from the UE.

The time domain resource unit includes a time domain resource used to transmit a reference signal.

Optionally, the reference signal includes a measurement reference signal and/or a downlink reference signal. According to the invention, the reference signal includes a measurement reference signal.

It may be understood that, in the embodiment shown in FIG. 3, a measurement method applied to a measurement reference signal is provided. Therefore, for related description, refer to the embodiment shown in FIG. 3, and details are not described herein again.

Optionally, a subcarrier spacing of the measurement reference signal is greater than a subcarrier spacing of a data channel of the UE.

Optionally, a subcarrier spacing of the measurement reference signal is different from a subcarrier spacing of a data channel of the UE.

A subcarrier spacing of the measurement reference signal is a multiple of a subcarrier spacing of a data channel of the UE. Optionally, the multiple is greater than 1.

Optionally, the multiple is an integral multiple.

For configuration of the subcarrier spacing, refer to the description in the embodiment shown in FIG. 3. Details are not described herein again.

Optionally, the reference signal is transmitted in a guard period area or a blank resource of the time domain resource unit, and the blank resource is a resource that is not configured for transmission.

Optionally, the characteristic information is one of more than one type of characteristic information.

A specific structure of a time domain resource unit is used as an example below to describe in detail the foregoing embodiment in FIG. 3 or in FIG. 4.

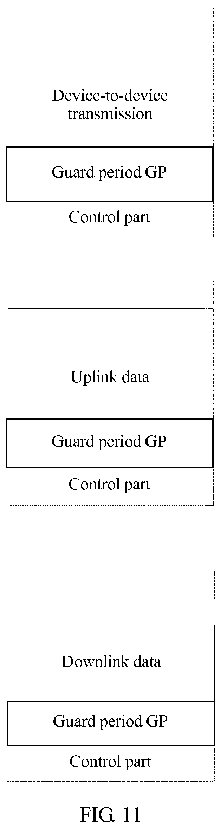

In an optional solution, an evolved subframe or slot structure (as shown in FIG. 11) is provided. This subframe or slot structure includes a downlink control area and an uplink data area, or a downlink control area and a downlink data area. In addition, a GP is inserted between the downlink control area and the uplink data area. In a same subframe or slot, a GP is inserted between the downlink control area and the downlink data area, and a part of the GP is used to measure interference between base stations and/or between UEs.

The inventor of this application finds through study that an interval for uplink-downlink handover also needs to be considered for a measurement reference signal inserted into the GP. If a same subcarrier spacing is used for the measurement reference signal inserted into the GP and the data channel, a time length of a GP that is originally set only for uplink-downlink handover needs to be extended, so as to accommodate a part used to transmit the measurement reference signal, and ensure accuracy of receiving the measurement reference signal by a base station and/or UE. For example, if the measurement reference signal occupies one symbol in time domain, to ensure accuracy of receiving the measurement reference signal by the base station and/or the UE, one additional symbol needs to be used to send a timing adjustment. Therefore, a quantity of symbols that can be used to transmit a data channel in one subframe or one slot is reduced.

In view of this, a reference signal transmission method applied to the foregoing structure is provided in this application. This can not only support measurement of interference between base stations and/or between UEs, but also reduce resource overheads used for interference measurement.

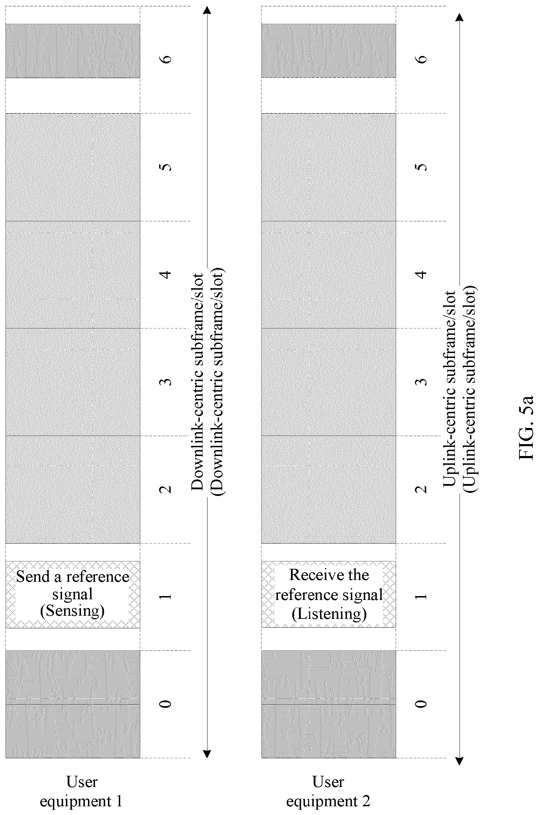

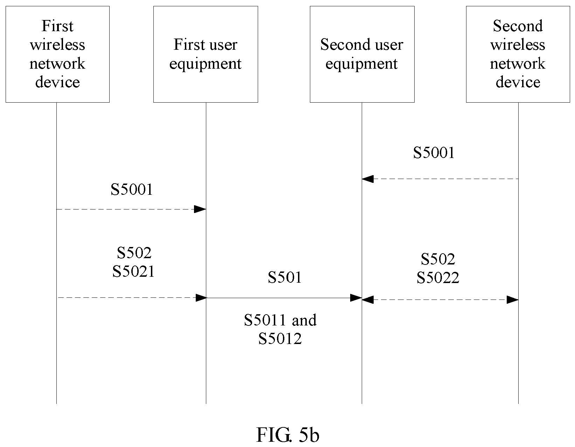

As shown in FIG. 5b, an embodiment of the present invention provides an information transmission method. FIG. 5a is a schematic structural diagram of a corresponding time domain resource unit. The method includes the following step:
S501. UE performs communication based on a structure of a time domain resource unit, where the structure of the time domain resource unit includes a first part used to transmit a control signal and a third part used to transmit uplink or downlink data, there is a second part used to transmit a reference signal between the first part and the third part, and a subcarrier spacing of the reference signal is a multiple of a subcarrier spacing of the uplink or downlink data.

The method may further include the following step:
S502. A wireless network device performs communication based on the structure of the time domain resource unit.

The transmission includes sending or receiving.

Uplink is a direction in which the UE performs sending and the wireless network device performs receiving, and downlink is a direction in which the UE performs receiving and the wireless network device performs sending.

The second part is further used for a guard period required for uplink-downlink handover (including uplink-to-downlink handover or downlink-to-uplink handover).

One possible case is as follows:
The time domain resource unit is a subframe or a slot, or may be another time domain resource unit. The structure of the time domain resource unit includes a first structure of the time domain resource unit and a first structure of the time domain resource unit. The first structure includes a first part used to receive a control signal and a third part used to receive downlink data. There is a second part used to send a reference signal between the first part and the third part. The second structure includes a first part used to receive a control signal and a third part used to send uplink data. There is a second part used to receive a reference signal between the first part and the third part.

Optionally, the structure of the time domain resource unit may further include a fourth part used to transmit an uplink control signal.

Specifically, the UE may include first UE and second UE. S501 in the method may include the following steps:
S5011. First UE performs communication based on a first structure of the time domain resource unit, including: receiving, by the first UE, a control signal in the first part, sending a reference signal in the second part, and receiving downlink data in the third part; and/or
S5012. Second UE performs communication based on a second structure of the time domain resource unit, including: receiving, by the second UE, a control signal in the first part, receiving a reference signal in the second part, and sending uplink data in the third part.

In this way, the second UE receives the reference signal, such as a measurement reference signal, in the second part, to learn interference from the first UE to the second UE, and may learn, based on channel reciprocity, interference from the uplink data sending of the second UE in the third part to the downlink data reception of the first UE in the third part.

S502 in the method may include the following steps:

S5021. A first wireless network device sends the control signal to the first UE in the first part, and sends the downlink data to the first UE in the third part; and/or

S5022. A second wireless network device sends the control signal to the second UE in the first part, and receives the uplink data from the second UE in the third part.

In this way, interference between the UEs may be measured by using a time area, namely, a guard period for uplink-downlink handover. In addition, because a subcarrier spacing of a reference signal used for interference measurement is greater than a subcarrier spacing of data transmission, an OFDM symbol period of the reference signal is shorter than an OFDM symbol period of data, so that time domain resource overheads can be reduced while alignment of reference signal receiving and sending in time domain is ensured, thereby reducing impact on a data channel that is caused by the reference signal, and fully utilizing time domain resources. In addition, a larger subcarrier spacing indicates easier FFT transformation processing. Therefore, reference signal processing is further simplified on a UE side in this solution, and processing overheads of the UE are reduced.

Optionally, the reference signal in S501 is a first reference signal, and may be used to measure interference between the UEs. S5021 may further include:

The first wireless network device receives a second reference signal in the second part.

S5022 may further include:
The second wireless network device sends the second reference signal in the second part.

The second reference signal is used to measure interference between the wireless network devices.

Sequences of the second reference signal and the first reference signal are different.

A subcarrier spacing of the second reference signal is a multiple of a subcarrier spacing of data (or a data channel).

In this way, interference between the wireless network devices may also be measured by using the second part, so that utilization of time domain resources is further improved.

Optionally, the subcarrier spacing of the reference signal (the first reference signal and/or the second reference signal) may be predefined, for example, predefined by a system or a standard protocol. In this way, the wireless network device and the UE may transmit the reference signal based on the predefined subcarrier spacing.

Optionally, the subcarrier spacing of the reference signal (the first reference signal and/or the second reference signal) may be explicitly indicated. For example, the first reference signal (used to measure interference between the UEs) is configured by using dynamic or semi-static signaling. The dynamic signaling may be carried on a control channel, for example, indicated by using downlink control information (downlink control information, DCI) carried on the control channel, and the semi-static signaling may be carried in higher layer signaling (for example, radio resource control (radio resource control, RRC) signaling) or a broadcast channel. The second reference signal (used to measure interference between the wireless network devices) is indicated through interaction between the wireless network devices, and an explicit indication is used in the interaction.

Optionally, the subcarrier spacing of the reference signal (the first reference signal and/or the second reference signal) may be implicitly indicated. For example, the subcarrier spacing may be the same as a subcarrier spacing of a channel or has a fixed relationship with a subcarrier spacing of a channel. The channel may include a synchronization signal or a broadcast channel. The subcarrier spacing of the channel may be predefined, or may be explicitly or implicitly indicated. The fixed relationship may be predefined, or may be explicitly or implicitly indicated.

Further, the method may further include the following step:
S5001. The first wireless network device sends configuration information of the first reference signal to the first UE, where the configuration information includes information about a subcarrier spacing of the first reference signal.

The second wireless network device sends the configuration information of the first reference signal to the second UE, where the configuration information includes the information about the subcarrier spacing of the first reference signal.

Optionally, the configuration may be the foregoing explicit configuration or implicit configuration.

Optionally, the information about the subcarrier spacing of the first reference signal may be a value of the subcarrier spacing, or may be information indicating the subcarrier spacing. This may not be limited herein.

Optionally, the method may further include:
The first wireless network device and the second wireless network device determine the subcarrier spacing of the second reference signal.

Optionally, the determining may be the foregoing predefining, or may be the foregoing explicit or implicit indication, and the indication may be implemented through interaction between the first wireless network device and the second wireless network device.

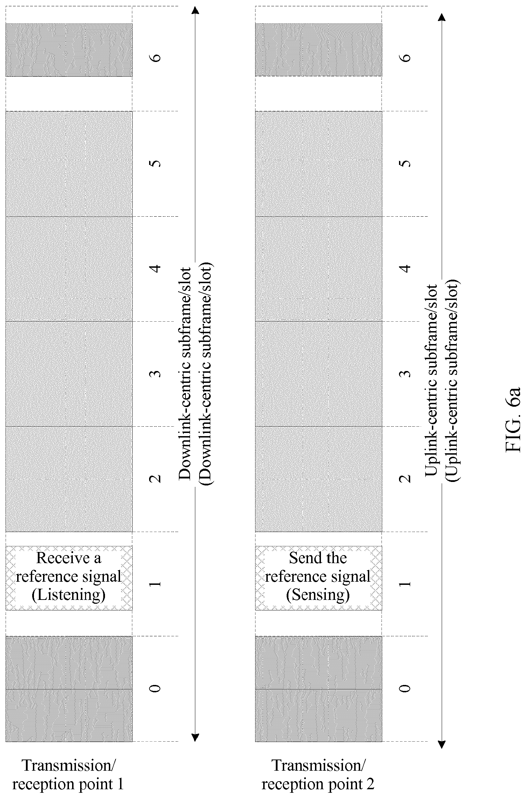

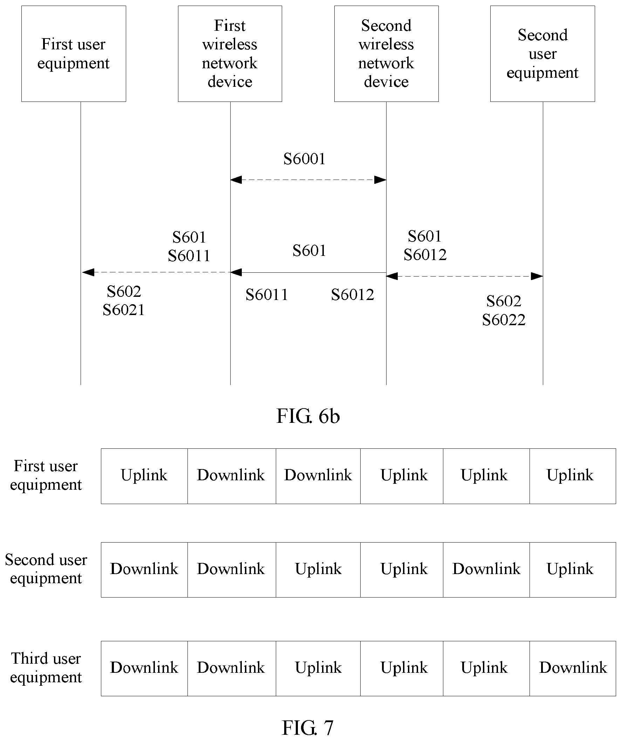

As shown in FIG. 6b, an embodiment of this application further provides an information transmission method. FIG. 6a is a schematic structural diagram of a corresponding time domain resource unit. The method includes the following step:

S601. A wireless network device performs communication based on a structure of a time domain resource unit, where the structure of the time domain resource unit includes a first part used to transmit a control signal and a third part used to transmit uplink or downlink data, there is a second part used to transmit a reference signal between the first part and the third part, a subcarrier spacing of the reference signal is a multiple of a subcarrier spacing of the uplink or downlink data, and the control signal may include a downlink control signal.

The method may further include the following step:
S602. UE performs communication based on the structure of the time domain resource unit.

The transmission includes sending or receiving.

Uplink is a direction in which the UE performs sending and the wireless network device performs receiving, and downlink is a direction in which the UE performs receiving and the wireless network device performs sending.

The second part is further used for a guard period required for uplink-downlink handover (including uplink-to-downlink handover or downlink-to-uplink handover).

One possible case is as follows:
The time domain resource unit is a subframe or a slot, or may be another time domain resource unit. The structure of the time domain resource unit includes a first structure of the time domain resource unit and a first structure of the time domain resource unit. The first structure includes a first part used to send a control signal and a third part used to send downlink data. There is a second part used to receive a reference signal between the first part and the third part. The second structure includes a first part used to send a control signal and a third part used to receive uplink data. There is a second part used to send a reference signal between the first part and the third part.

Optionally, the structure of the time domain resource unit may further include a fourth part used to transmit an uplink control signal.

Specifically, the wireless network device may include a first wireless network device and a second wireless network device. S601 in the method may include the following steps:
S6011. A first wireless network device performs communication based on a first structure of the time domain resource unit, including: sending, by the first wireless network device, a control signal in the first part, receiving a reference signal in the second part, and sending downlink data in the third part; and/or
S6012. A second wireless network device performs communication based on a second structure of the time domain resource unit, including: sending, by the second wireless network device, a control signal in the first part, sending a reference signal in the second part, and receiving uplink data in the third part.

In this way, the first wireless network device receives the reference signal, such as a measurement reference signal, in the first part, to learn interference from the second wireless network device to the first wireless network device, and may learn, based on channel reciprocity, interference from the downlink data sending of the first wireless network device in the third part to the uplink data reception of the second wireless network device in the third part.

S602 in the method may include the following steps:
S6021. First UE receives the control signal from the first wireless network device in the first part, and receives the downlink data from the first wireless network device in the third part; and/or
S6022. Second UE receives the control signal from the second wireless network device in the first part, and receives the uplink data from the second wireless network device in the third part.

In this way, interference between the wireless network devices may be measured by using a time area, namely, a guard period for uplink-downlink handover. In addition, because a subcarrier spacing of a reference signal used for interference measurement is greater than a subcarrier spacing of data transmission, an OFDM symbol period of the reference signal is shorter than an OFDM symbol period of data, so that time domain resource overheads can be reduced while alignment of reference signal receiving and sending in time domain is ensured, thereby reducing impact on a data channel that is caused by the reference signal, and fully utilizing time domain resources. In addition, a larger subcarrier spacing indicates easier FFT transformation processing. Therefore, reference signal processing is further simplified on a wireless network device side in this solution, and processing overheads of the wireless network device are reduced.

Optionally, the reference signal in S601 is a second reference signal, used to measure interference between the wireless network devices. S6021 may further include:
The first UE sends a first reference signal in the second part.

S6022 may further include:
The second UE receives the first reference signal in the second part.

The first reference signal is used to measure interference between the UEs.

Sequences of the first reference signal and the second reference signal are different.

A subcarrier spacing of the first reference signal is a multiple of a subcarrier spacing of data.

In this way, interference between the UEs may also be measured by using the second part, so that utilization of time domain resources is further improved.

Optionally, the subcarrier spacing of the reference signal (the first reference signal and/or the second reference signal) may be predefined, for example, predefined by a system or a standard protocol. In this way, the wireless network device and the UE may transmit the reference signal based on the predefined subcarrier spacing.

Optionally, the subcarrier spacing of the reference signal (the first reference signal and/or the second reference signal) may be explicitly indicated. For example, the first reference signal (used to measure interference between the UEs) is configured by using dynamic or semi-static signaling. The dynamic signaling may be carried on a control channel, for example, indicated by using downlink control information (downlink control information, DCI) carried on the control channel, and the semi-static signaling may be carried in higher layer signaling (for example, radio resource control (radio resource control, RRC) signaling) or a broadcast channel. The second reference signal (used to measure interference between the wireless network devices) is indicated through interaction between the wireless network devices, and an explicit indication is used in the interaction.

Optionally, the subcarrier spacing of the reference signal (the first reference signal and/or the second reference signal) may be implicitly indicated. For example, the subcarrier spacing may be the same as a subcarrier spacing of a channel or has a fixed relationship with a subcarrier spacing of a channel. The channel may include a synchronization signal or a broadcast channel. The subcarrier spacing of the channel may be predefined, or may be explicitly or implicitly indicated. The fixed relationship may be predefined, or may be explicitly or implicitly indicated.

Further, the method may further include the following step:
S6001. The first wireless network device and the second wireless network device determine a subcarrier spacing of a second reference signal.

Optionally, the determining may be the foregoing predefining, or may be the foregoing explicit or implicit indication, and the indication may be implemented through interaction between the first wireless network device and the second wireless network device.

Optionally, the method may further include the following step:
S6002. The wireless network device configures a subcarrier spacing of the first reference signal for the UE.

Optionally, the configuration may be the foregoing explicit configuration or implicit configuration.

In the foregoing embodiment, measurement of interference between the wireless network devices and/or the UEs may be ensured. In addition, overheads caused by transmission of a reference signal used for measurement and a guard period for the reference signal may be reduced, so that utilization of time domain resources can be improved, and data transmission efficiency can be ensured.

In the foregoing embodiment, a reference signal is transmitted, so that short-term adjustment and control, for example, power control and rate adjustment on a current time domain resource unit, can be performed based on an interference measurement result on the current time domain resource unit; or long-term adjustment and control can be performed based on interference measurement results on a plurality of time domain resource units, for example, user scheduling or resource allocation can be performed based on a measurement result.

In a scenario in which long-term adjustment and control are performed based on the interference measurement results on the plurality of time domain resource units, structures of the time domain resource units used by different neighboring cells in dynamic TDD may be the first structure or the second structure (in other words, may be different), and one cell may have one or more neighboring cells. Therefore, on different time domain resource units, interference to UE in a cell from UE in a neighboring cell may be different. For example, FIG. 7 shows a case in which one cell has two neighboring cells. The cell is referred to as a first cell. The neighboring cells include a second cell and a third cell. UE in the first cell is first UE, UE in the second cell is second UE, and UE in the third cell is third UE. For ease of description, the first structure may be referred to as a downlink (UL) structure, and the second structure may be referred to as an uplink (UL) structure. It can be learned that, reference signals of the second UE and the third UE that are received in a second part of a UL structure of the first UE vary on five time domain resource units shown in FIG. 7. For example, in a first UL structure of the first UE, the first UE can detect measurement reference signals of two UEs (the second UE and the third UE) from the neighboring cells (because a UL structure exists for the second UE and the third UE), in a second UL structure of the first UE, the first UE cannot detect a measurement reference signal from the neighboring cells (because a UL structure also exists for the second UE and the third UE), and in a third UL structure of the first UE, the first UE can detect a measurement reference signal of UE (the second UE) from one neighboring cell (a UL structure exists for the third UE, and a DL structure exists for the second UE). Therefore, interference amounts detected by UL structures of different time domain resource units of the first UE are different.

In addition, the first UE may further receive a reference signal from a wireless network device side in a UL structure (not limited to the structure of the foregoing time domain resource unit, where the UL structure herein may alternatively be a UL structure in a structure of another time domain resource unit, and the reference signal may not be a reference signal carried in a second part of the UL structure, for example, a downlink control transmission part is occupied by the reference signal from the wireless network device side, and the reference signal is, for example, a downlink reference signal), and measures a downlink. In this case, the reference signal detected in the UL structure of the first UE may be from a first wireless network device that serves the first UE and/or a wireless network device to which the neighboring cell belongs (for example, a second wireless network device that serves the second UE and a third wireless network device that serves the third UE). On one time domain resource unit in the neighboring cell, if a structure of the time domain resource unit is a DL structure, the reference signal delivered by the wireless network device to which the neighboring cell belongs may also be received in the downlink control transmission part of the first UE. In this way, on one time domain resource unit, the first UE not only can detect the reference signal delivered by the first wireless network device, but also can detect a reference signal delivered by a wireless network device on a time domain resource unit of the DL structure in the neighboring cell, so that interference to the current cell (the cell in which the first UE is located) from the neighboring cell can be detected. In this case, because structures of time domain resource units of different cells are variable, downlink interference detected by the first UE is also variable.

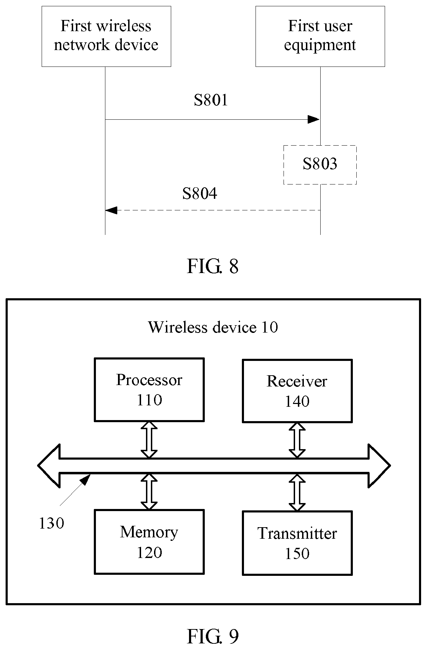

In view of this, an embodiment of the present invention provides an information transmission method. As shown in FIG. 8, the method includes the following step:
S801. A first wireless network device sends characteristic information of a time domain resource unit to first UE, where the characteristic information is related to interference to the time domain resource unit, or is related to a data transmission direction on the time domain resource unit, and the data transmission direction on the time domain resource unit may include information about a data transmission direction on a time domain resource unit of the first UE (or a cell in which the first UE is located) and a data transmission direction on a time domain resource unit of a neighboring cell of the cell in which a first cell is located.

Optionally, before S801, the method includes: The first wireless network device determines the characteristic information of the time domain resource unit of the first UE (or the first cell to which the first UE belongs).

The characteristic information of the time domain resource unit may be used to indicate information about a structure of a time domain resource unit of the first cell and a structure of a time domain resource unit of a cell (which may also be referred to as a neighboring cell) adjacent to the first cell.

The cell adjacent to the first cell belongs to a second wireless network device, or belongs to the first wireless network device.

Optionally, the time domain resource unit is a time domain resource unit used to transmit uplink data of the first UE.

Optionally, the information about the data transmission direction on the time domain resource unit of the first UE (or the cell in which the first UE is located) and the data transmission direction on the time domain resource unit of the neighboring cell of the first cell (referred to as direction information of a time domain resource unit set) may be encoded. Optionally, for the time domain resource unit used to transmit uplink data in the first cell, encoding may be performed based on a quantity of time domain resource units, in time domain resource units of the neighboring cell, used to transmit downlink data. For example, when the quantity is 0, the direction information of the time domain resource unit set is encoded as first information, for example, 0; when the quantity is 1, the direction information of the time domain resource unit set is encoded as second information, for example, 1; and when the quantity is 2, the direction information of the time domain resource unit set is encoded as third information, for example, 2. Correspondingly, the characteristic information of the time domain resource unit may be determined based on the direction information of the time domain resource unit set, and direction information of different time domain resource unit sets corresponds to characteristic information of different time domain resource units. An optional manner is that the characteristic information of the time domain resource unit is equal to the direction information of the time domain resource unit set. It may be understood that an encoding manner of the characteristic information of the time domain resource unit may be predefined by a system. In this case, the first wireless network device and the first UE may determine the direction information of the time domain resource unit set based on the characteristic information of the time domain resource unit, so as to determine a type of detected interference information (also referred to as an interference level). The type of the interference information may correspond to the direction information of the time domain resource unit set. When a direction on a time domain resource unit of the neighboring cell is different from a direction on a time domain resource unit of the current cell, interference may be determined. Types of different interference information may be determined based on whether there is interference, or different interference quantities. For example, if an interference quantity is 0, a type of interference information is a first type; if an interference quantity is 1, a type of interference information is a second type; and if an interference quantity is 2, a type of interference information is a third type. Optionally, the data transmission directions on the time domain resource units of the current cell and the neighboring cell may be encoded. For example, 0 represents that a data transmission direction is uplink, and 1 represents that a data transmission direction is downlink. Each bit (bit) is used to represent a corresponding cell. For example, there are three cells. A most significant bit represents the current cell, and other bits successively represent neighboring cells (which may be sorted based on neighboring cell ids or according to another rule, where the rule may be predefined in an entire system without air interface configuration). 000 represents that data transmission directions of the three cells on a time domain resource unit are all uplink; 010 represents that a data transmission direction of the current cell on a time domain resource unit is uplink, a data transmission direction of one neighboring cell on the time domain resource unit is downlink, and a data transmission direction of the other neighboring cell on the time domain resource unit is uplink; 001 represents that a data transmission direction of the current cell on a time domain resource unit is uplink, a data transmission direction of one neighboring cell on the time domain resource unit is uplink, and a data transmission direction of the other neighboring cell on the time domain resource unit is downlink; and 011 represents that a data transmission direction of the current cell on a time domain resource unit is uplink, and data transmission directions of the two neighboring cells on the time domain resource unit are downlink. In this manner, optionally, in each case of 010 and 001, there is one interference to the UE. In other words, types of interference information are the same. The UE may use a same processing manner for measurement results corresponding to the two codes: 010 and 001, combines the measurement results, and reports a result obtained after the combination.

Optionally, that the wireless network device determines the characteristic information of the time domain resource unit of the first UE (or the first cell to which the first UE belongs) may specifically include:
The wireless network device exchanges the structures of the time domain resource units with a wireless network device to which the neighboring cell of the first cell belongs, so that the wireless network device learns the structures of the time domain resource units of the first cell to which the first UE belongs and the neighboring cell of the first cell, and further determine the characteristic information of the time domain resource unit of the first cell to which the first UE belongs.

Optionally, the characteristic information of the time domain resource unit in S801 may be sent by using dynamic or semi-static signaling.

The dynamic signaling may be carried on a control channel, for example, downlink control information (DCI) on a downlink control channel.

The semi-static signaling may be carried on a broadcast channel or higher layer signaling, for example, radio resource control (RRC) signaling.

When a data transmission direction on a time domain resource unit is configured by using dynamic signaling, characteristic information of the time domain resource unit may be configured by using dynamic signaling; or
when a data transmission direction on a time domain resource unit is configured by using semi-static signaling, characteristic information of the time domain resource unit may be configured by using semi-static signaling.

It may be understood that, although description for the first UE is provided in this embodiment, the first UE is not specific UE. For second UE and third UE, a wireless network device that serves the second UE may also perform the method corresponding to FIG. 8, and a wireless network device that serves the third UE may also perform the method corresponding to FIG. 8.

Optionally, S801 may further include:
The first UE receives the characteristic information of the time domain resource unit from the first wireless network device.

The method may further include the following steps:
S803. The first UE processes, based on the characteristic information of the time domain resource unit, a measurement result obtained on the time domain resource unit.
S804. The first UE reports the measurement result to the first wireless network device.

Optionally, S803 may include: The first UE processes measurement results on at least two time domain resource units based on characteristic information of the at least two time domain resource units. A possible manner is combining measurement results on time domain resource units with same characteristic information. Another possible manner is combining measurement results on a plurality of time domain resource units based on a type of interference information corresponding to characteristic information, where a correspondence between the characteristic information and the type of the interference information may be predefined.

Optionally, the combination may be performing averaging or weighting processing (for example, smooth filtering) on measurement results on time domain resource units with a same type of interference information, and sending a result obtained after the averaging or weighting processing to the wireless network device. In this case, the wireless network device may relatively accurately learn a channel status based on the received result. Specifically, the wireless network device may learn, in one of the following various manners, an interference level corresponding to the reported measurement result: using a specific time-frequency resource of the reported measurement result (different levels correspond to different time-frequency resources), a specific code of the reported measurement result (different levels correspond to different codes), a corresponding indication of the wireless network device for reporting the reported measurement result, different sequence numbers of measurement results corresponding to different interference levels, or the like. This is not limited herein.

Based on the foregoing methods, as shown in FIG. 9, an embodiment of the present invention further provides an information transmission apparatus, and the apparatus may be a wireless device 10. The wireless device 10 may correspond to the wireless network device (for example, the first wireless network device or the second wireless network device) in the foregoing methods. The wireless network device may be a base station, or may be another device. This is not limited herein.

The apparatus may include a processor 110, a memory 120, a bus system 130, a receiver 140, and a transmitter 150. The processor 110, the memory 120, the receiver 140, and the transmitter 150 are connected to each other by using the bus system 130. The memory 120 is configured to store an instruction. The processor 110 is configured to execute the instruction stored in the memory 120 to control the receiver 140 to receive a signal and control the transmitter 150 to send a signal, to complete the steps performed by the wireless network device (for example, a base station) in the foregoing methods. The receiver 140 and the transmitter 150 may be a same physical entity or different physical entities. When the receiver 140 and the transmitter 150 are a same physical entity, the receiver 140 and the transmitter 150 may be collectively referred to as a transceiver.

In an implementation, functions of the receiver 140 and the transmitter 150 may be implemented by using a transceiver circuit or a dedicated transceiver chip. The processor 110 may be implemented by using a dedicated processing chip, processing circuit, or processor, or a universal chip.

In another implementation, a wireless access device provided in this embodiment of the present invention may be implemented in a form of a general-purpose computer. To be specific, program code that is used to implement functions of the processor 110, the receiver 140, and the transmitter 150 is stored in the memory. A general-purpose processor implements the functions of the processor 110, the receiver 140, and the transmitter 150 by executing the code in the memory.

For a concept, explanation, detailed description, and other steps that are related to the apparatus and the technical solution provided in this embodiment of the present invention, refer to the description about the content in the foregoing methods or in another embodiment. Details are not described herein again.

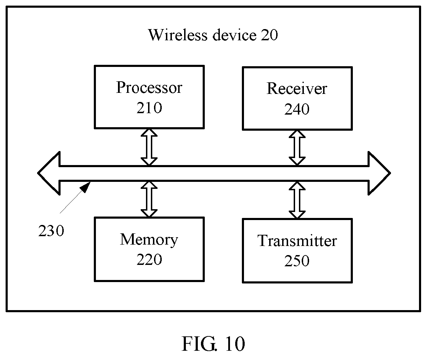

Based on the foregoing methods, as shown in FIG. 10, an embodiment of the present invention further provides another information transmission apparatus. The apparatus may be a wireless device 20. The wireless device 20 corresponds to the user equipment (for example, the first UE or the second UE) in the foregoing methods. It may be understood that the wireless device may be UE, or may be a micro base station or a small cell. This is not limited herein.

The apparatus may include a processor 210, a memory 220, a bus system 230, a receiver 240, and a transmitter 250. The processor 210, the memory 220, the receiver 240, and the transmitter 250 are connected to each other by using the bus system 230. The memory 220 is configured to store an instruction. The processor 210 is configured to execute the instruction stored in the memory 220 to control the receiver 240 to receive a signal and control the transmitter 250 to send a signal, to complete the steps performed by the UE in the foregoing methods. The receiver 240 and the transmitter 250 may be a same physical entity or different physical entities. When the receiver 240 and the transmitter 250 are a same physical entity, the receiver 240 and the transmitter 250 may be collectively referred to as a transceiver.

In an implementation, functions of the receiver 240 and the transmitter 250 may be implemented by using a transceiver circuit or a dedicated transceiver chip. The processor 210 may be implemented by using a dedicated processing chip, processing circuit, or processor, or a universal chip.

In another implementation, a wireless access device provided in this embodiment of the present invention may be implemented in a form of a general-purpose computer. To be specific, program code that is used to implement functions of the processor 210, the receiver 240, and the transmitter 250 is stored in the memory. A general-purpose processor implements the functions of the processor 210, the receiver 240, and the transmitter 250 by executing the code in the memory.

For a concept, explanation, detailed description, and other steps that are related to the apparatus and the technical solution provided in this embodiment of the present invention, refer to the description about the content in the foregoing methods or in another embodiment. Details are not described herein again.

Based on the methods provided in the embodiments of the present invention, an embodiment of the present invention further provides a communications system, including the foregoing wireless network device and one or more user equipments.

It should be understood that in the embodiments of the present invention, the processor 110 or 210 may be a central processing unit (Central Processing Unit, "CPU" for short), or the processor may be another general-purpose processor, a digital signal processor (DSP), an application-specific integrated circuit (ASIC), a field programmable gate array (FPGA) or another programmable logic device, a discrete gate or transistor logic device, a discrete hardware component, or the like. The general-purpose processor may be a microprocessor, or the processor may be any conventional processor or the like.

The memory 120 or 220 may include a read-only memory and a random access memory, and provide an instruction and data to the processor 310. Apart of the memory may further include a non-volatile random access memory. For example, the memory may further store information about a device type.

The bus system 130 or 230 may include a power bus, a control bus, a status signal bus, and the like in addition to a data bus. However, for clear description, various types of buses in the figure are marked as the bus system.

In an implementation process, the steps in the foregoing methods can be implemented by using an integrated logic circuit of hardware in the processor 110 or 210, or by using instructions in a form of software. The steps of the method disclosed with reference to the embodiments of the present invention may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be further understood that "first", "second", "third", "fourth", and various numbers are merely used for differentiation for ease of description, and are not construed as a limitation on the scope of the embodiments of the present invention.

It should be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in the embodiments of the present invention. The execution sequences of the processes should be determined based on functions and internal logic of the processes, and should not be construed as any limitation on the implementation processes of the embodiments of the present invention.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or may not be performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of the present invention may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of the present invention. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc.

The foregoing description is merely specific implementations of the present invention, but is not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. An information transmission method performed by a first terminal device, comprising:
receiving (S301), from a second wireless device, a measurement reference signal, wherein a subcarrier spacing of the measurement reference signal is a multiple of a subcarrier spacing of a data channel,
receiving (S303) configuration information from a wireless network device, wherein the configuration information comprises information used to configure the measurement reference signal, and the information about the measurement reference signal comprises information about the subcarrier spacing of the measurement reference signal, wherein the information about the subcarrier spacing of the measurement reference signal comprises information about a quantity of times by which the subcarrier spacing of the measurement reference signal is the subcarrier spacing of the data channel of the first terminal device,
receiving (S307) characteristic information of a time domain resource unit from the wireless network device through a downlink control channel, wherein the characteristic information is related to interference to the time domain resource unit, or is related to a data transmission direction on the time domain resource unit, wherein the data transmission direction corresponds to a type of interference information and the time domain resource unit comprises a resource used to transmit, by the second terminal device, the measurement reference signal; and
sending (S309) a measurement result to the wireless network device, wherein the measurement result is related to the characteristic information of the time domain resource unit and the received measurement reference signal.

2. An information transmission method performed by a wireless network device, comprising:
sending, to a first terminal device, information used to configure a measurement reference signal received by the first terminal device, from a second terminal device, wherein the information comprises information about a subcarrier spacing of the measurement reference signal, wherein the information about the subcarrier spacing of the measurement reference signal comprises information about a quantity of times by which the subcarrier spacing of the measurement reference signal is the subcarrier spacing of a data channel of the first terminal device,
sending characteristic information of a time domain resource unit to the first terminal device through a downlink control channel, wherein the characteristic information is related to interference to the time domain resource unit, or is related to a data transmission direction on the time domain resource unit, wherein the data transmission direction corresponds to a type of interference information and the time domain resource unit comprises a resource used to transmit, by the second terminal device, the measurement reference signal;
receiving a measurement result from the first terminal device, wherein the measurement result is related to the characteristic information of the time domain resource unit and the measurement reference signal received by the first terminal device.

3. The method according to claim 2, wherein the method further comprises:
determining the information used to configure the measurement reference signal.

4. The method according to any one of claims 1 to 3, wherein the information about the subcarrier spacing of the measurement reference signal is a value of the subcarrier spacing of the measurement reference signal.

5. The method according to any one of claims 1 to 4, wherein the configuration information is carried on the downlink control channel and/or the configuration information is carried on a broadcast channel or higher layer signaling.

6. The method according to claim 1, wherein the multiple is an integral multiple.

7. A wireless network device (10), comprising a processor (110), a memory (120), and a transceiver (150), wherein
the memory is configured to store an instruction, the processor (110) is configured to execute the instruction stored in the memory (120) to control the transceiver (150) to receive and send signals, and when the processor (110) executes the instruction stored in the memory (120), the wireless network device (10) is configured to complete the method according to any one of claims 2 to 6.

8. A terminal device (20), comprising a processor (210), a memory (220), and a transceiver (250), wherein
the memory (220) is configured to store an instruction, the processor (210) is configured to execute the instruction stored in the memory (220) to control the transceiver (250) to receive and send signals, and when the processor (210) executes the instruction stored in the memory (220), the terminal device (20) is configured to complete the method according to any one of claims 1, and 4 to 6.

9. A computer-readable storage medium comprising instructions which, when executed by a computer, cause the computer to carry out the method of any one of claims 1 to 6.

## Patentansprüche

1. Informationsübertragungsverfahren, das durch eine erste Endgerätevorrichtung ausgeführt wird, umfassend:
Empfangen (S301) eines Messreferenzsignals von einer zweiten drahtlosen Vorrichtung, wobei ein Unterträgerabstand des Messreferenzsignals ein Vielfaches eines Unterträgerabstands eines Datenkanals ist,
Empfangen (S303) von Konfigurationsinformationen von einer drahtlosen Netzwerkvorrichtung, wobei die Konfigurationsinformationen Informationen umfassen, die verwendet werden, um das Messreferenzsignal zu konfigurieren, und die Informationen über das Messreferenzsignal Informationen über den Unterträgerabstand des Messreferenzsignals umfassen, wobei die Informationen über den Unterträgerabstand des Messreferenzsignals Informationen über eine Anzahl von Malen umfassen, die der Unterträgerabstand des Messreferenzsignals dem Unterträgerabstand des Datenkanals der ersten Endgerätevorrichtung entspricht,
Empfangen (S307) von charakteristischen Informationen einer Zeitbereichsressourceneinheit von der drahtlosen Netzwerkvorrichtung über einen Downlink-Steuerkanal, wobei sich die charakteristischen Informationen auf eine Interferenz mit der Zeitbereichsressourceneinheit beziehen oder auf eine Datenübertragungsrichtung in der Zeitbereichsressourceneinheit beziehen, wobei die Datenübertragungsrichtung einer Art von Interferenzinformationen entspricht und die Zeitbereichsressourceneinheit eine Ressource umfasst, die verwendet wird, um das Messreferenzsignal durch die zweite Endgerätevorrichtung zu übertragen; und
Senden (S309) eines Messergebnisses an die drahtlose Netzwerkvorrichtung, wobei das Messergebnis sich auf die charakteristischen Informationen der Zeitbereichsressourceneinheit und das empfangene Messreferenzsignal bezieht.

2. Informationsübertragungsverfahren, das durch eine drahtlose Netzwerkvorrichtung ausgeführt wird, umfassend:
Senden von Informationen, die verwendet werden, um ein Messreferenzsignal zu konfigurieren, das durch die erste Endgerätevorrichtung von einer zweiten Endgerätevorrichtung empfangen wird, an eine erste Endgerätevorrichtung,
wobei die Informationen Informationen über einen Unterträgerabstand des Messreferenzsignals umfassen, wobei die Informationen über den Unterträgerabstand des Messreferenzsignals Informationen über eine Anzahl von Malen umfassen, die der Unterträgerabstand des Messreferenzsignals dem Unterträgerabstand eines Datenkanals der ersten Endgerätevorrichtung entspricht,
Senden von charakteristischen Informationen einer Zeitbereichsressourceneinheit an die erste Endgerätevorrichtung über einen Downlink-Steuerkanal, wobei sich die charakteristischen Informationen auf eine Interferenz mit der Zeitbereichsressourceneinheit beziehen oder auf eine Datenübertragungsrichtung in der Zeitbereichsressourceneinheit beziehen, wobei die Datenübertragungsrichtung einer Art von Interferenzinformationen entspricht und die Zeitbereichsressourceneinheit eine Ressource umfasst, die verwendet wird, um das Messreferenzsignal durch die zweite Endgerätevorrichtung zu übertragen;
Empfangen eines Messergebnisses von der ersten Endgerätevorrichtung, wobei sich das Messergebnis auf die charakteristischen Informationen der Zeitbereichsressourceneinheit bezieht und das Messreferenzsignal durch die erste Endgerätevorrichtung empfangen wird.

3. Verfahren nach Anspruch 2, wobei das Verfahren ferner Folgendes umfasst:
Bestimmen der Informationen, die verwendet werden, um das Messreferenzsignal zu konfigurieren.

4. Verfahren nach einem der Ansprüche 1 bis 3, wobei die Informationen über den Unterträgerabstand des Messreferenzsignals einen Wert des Unterträgerabstands des Messreferenzsignals darstellen.

5. Verfahren nach einem der Ansprüche 1 bis 4, wobei die Konfigurationsinformationen auf dem Downlink-Steuerkanal transportiert werden und/oder die Konfigurationsinformationen auf einem Rundsendekanal oder einer Signalisierung einer höheren Schicht transportiert werden.

6. Verfahren nach Anspruch 1, wobei das Vielfache ein ganzzahliges Vielfaches ist.

7. Drahtlose Netzwerkvorrichtung (10), umfassend einen Prozessor (110), einen Speicher (120) und einen Transceiver (150), wobei der Speicher dazu konfiguriert ist, eine Anweisung zu speichern, der Prozessor (110) dazu konfiguriert ist, die im Speicher (120) gespeicherte Anweisung auszuführen, um den Transceiver (150) zu steuern, um Signale zu empfangen und zu senden, und wenn der Prozessor (110) die Anweisung ausführt, die in dem Speicher (120) gespeichert ist, ist die drahtlose Netzwerkvorrichtung (10) dazu konfiguriert, das Verfahren nach einem der Ansprüche 2 bis 6 abzuschließen.

8. Endgerätevorrichtung (20), umfassend einen Prozessor (210), einen Speicher (220) und einen Transceiver (250), wobei der Speicher (220) dazu konfiguriert ist, eine Anweisung zu speichern, der Prozessor (210) dazu konfiguriert ist, die im Speicher (220) gespeicherte Anweisung auszuführen, um den Transceiver (250) zu steuern, um Signale zu empfangen und zu senden, und wenn der Prozessor (210) die Anweisung ausführt, die in dem Speicher (220) gespeichert ist, ist die Endgerätevorrichtung (20) dazu konfiguriert, das Verfahren nach einem der Ansprüche 1 und 4 bis 6 abzuschließen.

9. Computerlesbares Speichermedium, das Anweisungen umfasst, die bei ihrer Ausführung durch einen Computer bewirken, dass der Computer das Verfahren nach einem der Ansprüche 1 bis 6 ausführt.

## Revendications

1. Procédé de transmission d'informations exécuté par un premier dispositif terminal, comprenant :
la réception (S301), à partir d'un second dispositif sans fil, d'un signal de référence de mesure, dans lequel un espacement de sous-porteuse du signal de référence de mesure est un multiple d'un espacement de sous-porteuse d'un canal de données,
la réception (S303) d'informations de configuration en provenance d'un dispositif réseau sans fil, dans lequel les informations de configuration comprennent des informations utilisées pour configurer le signal de référence de mesure, et les informations sur le signal de référence de mesure comprennent des informations sur l'espacement de sous-porteuse du signal de référence de mesure,
dans lequel les informations sur l'espacement de sous-porteuse du signal de référence de mesure comprennent des informations sur une quantité de fois où l'espacement de sous-porteuse du signal de référence de mesure est l'espacement de sous-porteuse du canal de données du premier dispositif terminal,
la réception (S307) d'informations caractéristiques d'une unité de ressource de domaine temporel en provenance du dispositif réseau sans fil via un canal de commande de liaison descendante, dans lequel les informations caractéristiques sont liées à une interférence avec l'unité de ressource de domaine temporel, ou
sont liées à une direction de transmission de données sur l'unité de ressource de domaine temporel, dans lequel la direction de transmission de données correspond à un type d'informations d'interférence et l'unité de ressource de domaine temporel comprend une ressource utilisée pour transmettre, par le second dispositif terminal, le signal de référence de mesure ; et
l'envoi (S309) d'un résultat de mesure au dispositif réseau sans fil, dans lequel le résultat de mesure est lié aux informations caractéristiques de l'unité de ressource de domaine temporel et au signal de référence de mesure reçu.

2. Procédé de transmission d'informations exécuté par un dispositif réseau sans fil, comprenant :
l'envoi, à un premier dispositif terminal, d'informations utilisées pour configurer un signal de référence de mesure reçu par le premier dispositif terminal, en provenance d'un second dispositif terminal,
dans lequel les informations comprennent des informations sur un espacement de sous-porteuse du signal de référence de mesure, dans lequel les informations sur l'espacement de sous-porteuse du signal de référence de mesure comprennent des informations sur une quantité de fois où l'espacement de sous-porteuse du signal de référence de mesure est l'espacement de sous-porteuse d'un canal de données du premier dispositif terminal,
l'envoi d'informations caractéristiques d'une unité de ressource de domaine temporel au premier dispositif terminal via un canal de commande de liaison descendante, dans lequel les informations caractéristiques sont liées à une interférence avec l'unité de ressource de domaine temporel, ou sont liées à une direction de transmission de données sur l'unité de ressource de domaine temporel, dans lequel la direction de transmission de données correspond à un type d'informations d'interférence et l'unité de ressource de domaine temporel comprend une ressource utilisée pour transmettre, par le second dispositif terminal, le signal de référence de mesure ; et
la réception d'un résultat de mesure en provenance du premier dispositif terminal, dans lequel le résultat de mesure est lié aux informations caractéristiques de l'unité de ressource de domaine temporel et au signal de référence de mesure reçu par le premier dispositif terminal.

3. Procédé selon la revendication 2, dans lequel le procédé comprend en outre : la détermination des informations utilisées pour configurer le signal de référence de mesure.

4. Procédé selon l'une quelconque des revendications 1 à 3, dans lequel les informations sur l'espacement de sous-porteuse du signal de référence de mesure sont une valeur de l'espacement de sous-porteuse du signal de référence de mesure.

5. Procédé selon l'une quelconque des revendications 1 à 4, dans lequel les informations de configuration sont acheminées sur le canal de commande de liaison descendante et/ou les informations de configuration sont acheminées sur un canal de diffusion ou une signalisation de couche supérieure.

6. Procédé selon la revendication 1, dans lequel le multiple est un multiple entier.

7. Dispositif réseau sans fil (10), comprenant un processeur (110), une mémoire (120) et un émetteur-récepteur (150), dans lequel la mémoire est configurée pour stocker une instruction, le processeur (110) est configuré pour exécuter l'instruction stockée dans la mémoire (120) pour commander l'émetteur-récepteur (150) afin de recevoir et d'envoyer des signaux, et lorsque le processeur (110) exécute l'instruction stockée dans la mémoire (120), le dispositif réseau sans fil (10) est configuré pour terminer le procédé selon l'une quelconque des revendications 2 à 6.

8. Dispositif terminal (20), comprenant un processeur (210), une mémoire (220) et un émetteur-récepteur (250), dans lequel la mémoire (220) est configurée pour stocker une instruction, le processeur (210) est configuré pour exécuter l'instruction stockée dans la mémoire (220) pour commander l'émetteur-récepteur (250) afin de recevoir et d'envoyer des signaux, et lorsque le processeur (210) exécute l'instruction stockée dans la mémoire (220), le dispositif terminal (20) est configuré pour terminer le procédé selon l'une quelconque des revendications 1 et 4 à 6.

9. Support de stockage lisible par ordinateur comprenant des instructions qui, lorsqu'elles sont exécutées par un ordinateur, amènent l'ordinateur à mettre en œuvre le procédé selon l'une quelconque des revendications 1 à 6.
